Europäisches Patentamt

European Patent Office

Office européen des brevets

(19)

(11) **EP 1 339 641 B1**

(12) **EUROPÄISCHE PATENTSCHRIFT**

(45) Veröffentlichungstag und Bekanntmachung des Hinweises auf die Patenterteilung:
**01.09.2004 Patentblatt 2004/36**

(21) Anmeldenummer: **01976299.6**

(22) Anmeldetag: **11.10.2001**

(51) Int Cl.$^7$: **C01C 1/04**

(86) Internationale Anmeldenummer:
**PCT/EP2001/011750**

(87) Internationale Veröffentlichungsnummer:
**WO 2002/042209 (30.05.2002 Gazette 2002/22)**

(54) **MEHRDRUCKVERFAHREN ZUR HERSTELLUNG VON AMMONIAK**

MULTIPRESSURE METHOD FOR PRODUCING AMMONIA

PROCEDE MULTIPRESSION POUR LA PRODUCTION D'AMMONIAC

(84) Benannte Vertragsstaaten:
**AT BE CH CY DE DK ES FI FR GB GR IE IT LI LU MC NL PT SE TR**

(30) Priorität: **21.11.2000 DE 10057863**

(43) Veröffentlichungstag der Anmeldung:
**03.09.2003 Patentblatt 2003/36**

(73) Patentinhaber: **Uhde GmbH**
**44141 Dortmund (DE)**

(72) Erfinder:
• **LIPPMANN, Dennis**
**44267 Dortmund (DE)**
• **SKAANDERUP-LARSEN, John**
**Santa Fe, TX 77517 (US)**

(56) Entgegenhaltungen:
**EP-A1- 0 093 502      EP-A2- 0 179 392**
**DE-A1- 2 939 816      US-A- 4 780 298**

EP 1 339 641 B1

**Beschreibung**

Die Erfindung betrifft ein Verfahren zur. Herstellung von Ammoniak NH$_3$ unter Druck aus Synthesegas, welches gemäß Reaktion (1)

$$3 \, H_2 + N_2 \rightarrow 2NH_3 \qquad\qquad (1)$$

die Reaktanden Wasserstoff H$_2$ und Stickstoff N$_2$ enthält sowie, üblicherweise, gegenüber der Reaktion (1) inerte Komponenten wie Methan und Edelgase, die die Reaktion (1) hinsichtlich ihres Umsetzungsgrades beeinträchtigen, im folgenden als "Inerte" bezeichnet. Verfahren dieser Art werden üblicherweise so betrieben, dass zunächst das frische Synthesegas mehrstufig auf einen hohen Druck verdichtet wird, und dann das verdichtete, frische Synthesegas in einen Kreislauf eingespeist wird, der durch einen oder mehrere katalysatorgefüllte Reaktoren geführt wird, in denen Ammoniak erzeugt wird. Im Kreislauf ist.ein Abscheidesystem vorgesehen, mit dem das erzeugte Ammoniak aus dem Kreislauf in flüssiger Form entnommen wird.

Um eine Anreicherung der im entnommenen Ammoniak nur in geringer Konzentration löslichen Inerten im Kreislauf zu vermeiden, wird beständig ein Teil des im Kreislauf geführten Gases als Spülgas ausgeschleust. Aus diesem ausgeschleusten Spülgas werden Reste von Ammoniak ausgewaschen und der Wasserstoffanteil, gegebenenfalls auch der Stickstoffanteil, werden beispielsweise mittels Membrantechnik oder Tieftemperaturzerlegung abgeschieden und zurückgewonnen. Die verbleibenden Inerte, z.B. Methan, Argon, Helium und gegebenenfalls der verbleibende Stickstoff werden verworfen bzw. anderweitig zu Heizzwecken verwertet. Das zurückgewonnene Gas wird dem frischen Synthesegas vor der Verdichtung beigemischt und auf diese Weise verwertet. Es ist energetisch ungünstig, große Spülgasmengen aus dem Kreislauf auszuschleusen, da somit große Mengen an Gas bei der Trennung einem Druckverlust unterworfen wird und danach wieder aufwendig rückverdichtet werden müssen.

Aus diesem Grund wird eine Anreicherung der inerten Gasbestandteile von ursprünglich 1 bis 2 Vol-% im frischen Synthesegas bis auf 10 bis 20 Vol-% innerhalb des Kreislaufgases in Kauf genommen, obwohl mit diesen hohen Inertenkonzentrationen zwangsläufig der Nachteil verbunden ist, dass die Partialdrücke der an der Reaktion teilnehmenden Gase, die allein maßgeblich für die Lage des Reaktionsgleichgewichts als treibende Kraft der Reaktion sind, beträchtlich niedriger liegen als in einem inertenfreien Synthesekreislauf. Aus diesem Grund müssen auch die Katalysatorvolumina und die sie enthaltenden Reaktoren deutlich größer dimensioniert werden, als dies ohne Inerte im Synthesekreislauf erforderlich wäre.

Die trotz der beschriebenen Nachteile in Kauf genommene Anreicherung der Inerten im Kreislauf gegenüber deren ursprünglichem Gehalt im Frischgas zeigt den technischen Widerspruch auf, der dadurch entsteht, dass bei geringerer Spülgasmenge und somit höherem Inertengehalt die Betriebskosten, insbesondere die Verdichtungskosten, abnehmen, die Investitionskosten wegen der größeren erforderlichen Katalysatorvolumina, alternativ der erforderlichen teureren Katalysatorqualitäten, etwa auf Rutheniumbasis, jedoch steigen. Dieser technische Widerspruch lässt sich nach dem herkömmlichen Stand der Technik nicht auflösen. Der Fachmann ist daher darauf angewiesen, einen Kompromiss zu schließen und mittels aufwendiger Betriebskostenrechnung und Investitionskostenrechnung ein Kostenoptimum zu finden.

Bei der Synthese entsteht im Reaktor aus dem Synthesegas das Produktgas. Es besteht im wesentlichen aus dem nicht umgesetzten Teil des Einsatzgases, dem gebildeten Ammoniak und den Inerten. Am Ausgang des Reaktors liegt das erzeugte Ammoniak gasförmig vor. Um das Ammoniak vom Produktgas zu trennen, muss es kondensiert werden, damit es flüssig aus dem Kreislauf abgezogen werden kann. Da der Taupunkt des Ammoniaks von dessen Partialdruck und der Temperatur abhängt, sind ein hoher Synthesedruck und eine hohe Ammoniakkonzentration einerseits sowie eine niedrige Temperatur andererseits zur Kondensation des Produktes. vorteilhaft. Eine hohe Ammoniakkonzentration läßt sich mittels großen Katalysatorvolumina sowie geringen Inertenkonzentrationen erzielen, ein hoher Synthesedruck bedeutet entsprechenden Energieaufwand für die Synthesegasverdichtung und eine niedrige Abkühltemperatur setzt die entsprechenden Kühlvorrichtungen für das Kreislaufgas voraus.

Um'das erzeugte Ammoniak innerhalb des Kreislaufes mittels Wärmeverschiebungssystemen, Wasser bzw. Luftkühlung und/oder zusätzlichen Kühlkreisläufen derart abkühlen zu können, dass es kondensiert und somit flüssig abgezogen werden kann, wird üblicherweise ein Synthese-Arbeitsdruck zwischen 150 und 280 bar gewählt. Dieser relativ hohe Druck bietet den Vorteil, dass ein Großteil des Ammoniaks schon bei relativ hohen Temperaturen, wie sie mittels Wasserkühlung (z.B. Kühlung auf 30-40°C) erreicht werden können, kondensiert. So liegt z.B. für eine Produktkonzentration von 20 mol.-% bei einem Synthesedruck von 200 bar der Taupunkt bei-ca. 57 °C. Durch eine Wasserkühlung auf z.B. 35 °C lässt sich der Ammoniakgehalt im Gas bis auf 11,2 mol.-% senken und damit bereits 59 % der auskondensierbaren Produktmenge gewinnen. Da das Kreislaufgas, das zum Reaktor zurückgeführt wird, eine möglichst geringe Ammoniakkonzentration, in diesem Beispiel 3,8 mol.-%, aufweisen , sollte, wird in der Regel ein zusätzlicher Tiefkühlkreislauf der Wasserkühlung nachgeschaltet, um mit noch niedrigeren Temperaturen (z.B. Kühlung auf -10 °C bis 0 °C) weiteres Produkt auszukondensieren. Dieser Tiefkühlkreislauf benötigt Energie zur Rückverdichtung des verdampften Kältemittels. Bei den zuvor genannten hohen Synthesedrücken ist der Produktanteil, der mittels Tiefkühlung kondensiert werden muss, gering und es wird entsprechend wenig Energie für den Kältemittelverdichter benötigt.

Daraus wird sichtbar, weshalb der Fachmann geneigt ist, den Synthesearbeitsdruck, wie oben gesagt, in der Regel im Bereich zwischen 150 und 280 bar zu halten, wobei auch Ausnahmen bekannt geworden sind, in denen der Synthesedruck bis auf 60 bar abgesenkt wurde. Beispiele dafür sind in den Schriften EP 000 993, EP 093 502 und EP 179 392 beschrieben. Da bei Verringerung des Synthesedruckes das Volumen herkömmlicher Magnetitkatalysatoren überproportional anstiege, und somit auch die baulichen Anforderungen an die Reaktoren, beruhen die genannten Verfahren auf der Verwendung von hochaktiven Katalysatoren. Von dem mit Kobalt dotierten Magnetitkatalysator werden dabei immer noch beträchtliche Mengen benötigt und der Rutheniumkatalysator ist aufgrund seines Edelmetallgehaltes entsprechend teuer.

Je niedriger der Synthesedruck liegt, um so mehr verkleinert sich der Anteil der Wärme, der mittels Wasser- oder Luftkühlung abgeführt werden kann und derjenige Anteil an Wärme, der mittels Tiefkühlung abzuführen ist, vergrößert sich entsprechend. Hieraus ergibt sich ein weiterer technischer Widerspruch, wenn man wie üblich davon ausgeht, dass die Tiefkühlung einen Kältekreislauf mit einer Verdichtungseinheit erfordert. Während der Verdichtungsaufwand für den Synthesekreislauf mit abnehmenden Synthesedruck abnimmt, steigt der Verdichtungsaufwand für den Kältekreislauf, weil mehr Kälte für die Abscheidung des im Synthesekreislauf erzeugten Ammoniaks benötigt wird. In den Niederdruckverfahren wird der Kondensationsanteil vor der Tiefkühlung dadurch erhöht, dass ein sehr niedriger Inertengehalt über einen hohen Spülgasstrom eingestellt wird. Die Problematik mit Inertènanreicherung tritt wie in der Hochdruck-Synthese auf, ein geringer Inertengehalt erhöht die Produktkonzentration und somit den Taupunkt. Auch hier muss der Fachmann einen Kompromiss schließen und mittels aufwendiger Betriebskostenrechnung und Investitionskostenrechnung ein Kostenoptimum finden.

Seit vielen Jahren wird die großtechnische Herstellung von Ammoniak in großen, einsträngigen Anlagen durchgeführt. Die Einsträngigkeit ergibt sich aus den hohen Kosten für ein bei hohem Druck im Kreislauf geführtes System sowie den hohen' Kosten für den Verdichtungsprozess, welche beide einer hohen Degression mit zunehmendem Durchsatz unterliegen. Es besteht daher ein langjähriges technisches Vorurteil, dass eine wirtschaftliche Produktion von Ammoniak nur in einer einsträngigen Anlage durchgeführt werden kann

Es wurde nur selten der Versuch unternommen, einer solchen einsträngigen Anlage einen weiteren Strang hinzuzufügen, wie es etwa die Schrift DD 225 029 beschreibt. In dieser Schrift werden zwei nacheinander angeordnete Hochdruck-Synthesen auf gleichem Druckniveau beschrieben, von denen die erste ein Frischgassystem und die zweite ein konventionelles Kreislaufsystem ist, und darauf abgezielt wird, die im Kreislaufsystem erzeugte Ammoniakproduktion um den Betrag zu verringern, der sich im vorangeschalteten Frischgassystem erzeugen lässt, und die Kreislaufmengen entsprechend zu verringern. Das System konnte sich jedoch während 20 Jahren auf dem Markt nicht durchsetzen, wodurch das technische Vorurteil, nur einsträngige Anlagen könnten wirtschaftlich sein, sich zu bestätigen schien. Die oben beschriebenen technischen Widersprüche gelten im Übrigen auch für das in DD 225 029 beschriebene Reaktionssystem unverändert.

Die Aufgabe der Erfindung ist es daher, die oben genannten Nachteile zu überwinden und ein wirtschaftliches Verfahren zu Herstellung von Ammoniak zur Verfügung stellen.

Die Erfindung löst die Aufgabe dadurch, dass die Synthese von Ammoniak aus Synthesegas nacheinander in verschiedenen Synthesesystemen erfolgt, wobei in allen Synthesesystemen aus jeweils einem Teil des Synthesegases Ammoniak erzeugt und davon ein Teil ausgeschleust wird, und jedes nachfolgende Synthesesystem einen höheren Druck als das jeweils vorangegangene Synthesesystem aufweist. Unter einem Synthesesystem wird dabei ein Reaktionssystem verstanden, welches einen Reaktor und eine Einrichtung zur Abscheidung des erzeugten Ammoniaks enthält. Unter höherem Druck wird dabei ein Druckunterschied verstanden, der die Druckverluste innerhalb des Synthesesystems übersteigt.

In einer weiteren Ausgestaltung der Erfindung wird das erste Synthesesystem als Frischgassystem ausgeführt

In einer.weiteren Ausgestaltung der Erfindung werden mit Ausnahme des letzten Synthesesystems alle Synthesesysteme als Frischgassysteme ausgeführt.

In einer weiteren Ausgestaltung der Erfindung wird das letzte Synthesesystem als Kreislaufsystem ausgeführt wird.

In einer weiteren Ausgestaltung der Erfindung wird jedes Synthesesystem durch mindestens eine Verdichtungsstufe von dem jeweils darauf folgenden Synthesesystem getrennt.

In einer weiteren Ausgestaltung der Erfindung wird ein Spülgasstrom, der aus einem Synthesesystem mit einem höheren Druck ausgeschleust wird, nach Abtrennung und Ausschleusung von Inertgasbestandteilen, Ammoniak und möglichen weiteren Gasbestandteilen als Einsatzstrom in ein Synthesesystem mit einem niedrigeren Druck eingespeist

In einer weiteren Ausgestaltung der Erfindung wird dieser Spülgasstrom derart vergrößert, dass die Anreicherung mit Inerten in dem System mit dem höchsten Druck nicht mehr als 10 mol.-% beträgt.

In einer weiteren Ausgestaltung der Erfindung wird in mindestens einem Frischgasreaktor Katalysatormaterial verwendet, welches Magnetit mit Promotoren für Niederdruck-Synthesesysteme enthält.

In einer weiteren Ausgestaltung der Erfindung wird in mindestens einem Frischgasreaktor Katalysatormaterial verwendet, welches Edelmetall, z.B. Ruthenium enthält und hochaktiv ist.

Die Erfindung wird nachstehend beispielhaft anhand von 3 Verfahrensskizzen näher erläutert: Es zeigen:

Fig. 1: Ein erfindungsgemäßes Ausführungsbeispiel mit einem unter geringerem Druck betriebenen Synthesesystem und einem unter höherem Druck betriebenen Synthesesystem

Fig. 2: Eine vorteilhafte Einbindung des aus dem unter geringerem Druck betriebenen Synthesesystem abgezogenen Einsatzgases in das unter höherem Druck betriebenen Synthesesystem für eine Neuanlage oder eine Nachrüstung einer Altanlage

Fig. 3: Eine alternative Einbindung des aus dem unter geringerem Druck betriebenen Synthesesystem abgezogenen Einsatzgases in das unter höherem Druck betriebenen Synthesesystem für eine Neuanlage oder eine Nachrüstung einer Altanlage

Fig. 4: Eine Prinzipskizze für eine Anordnung mit mehreren FrischgasSynthesesystemen und einem Kreislauf-Synthesesystem

Zum besseren Verständnis des Kerns der Erfindung wird auf die Darstellung des Wärmeverbund-Systems und auf die Darstellung der mechanischen Verbindung der einzelnen Verdichterstufen sowie deren Anzahl verzichtet.

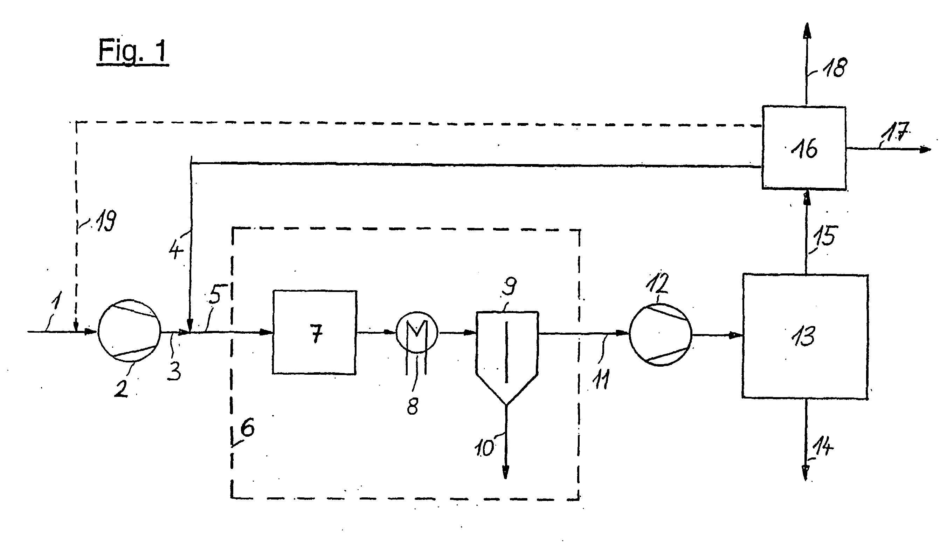

Fig. 1 stellt dar, dass frisches Synthesegas 1 in einer Vorverdichtung 2 auf einen Druck von ca. 60 bis 130 bar, vorzugsweise 90 bis 115 bar, verdichtet wird, sofern das frische Synthesegas nicht schon bei einem solchen Druck aus der üblicherweise vorgeschalteten Synthesegaserzeugungsanlage vorgelegt wird. Diesem vorverdichteten Synthesegas 3 wird das Rückführgas 4 beigemischt. Das sich ergebende Synthesegas 5 wird zunächst im ersten, unter geringem Druck betriebenen Synthesesystem 6 eingesetzt. Dort durchläuft es nacheinander den Frischgasreaktor 7 für die Synthese von Ammoniak, der auch aus mehreren Einzelreaktoren bestehen kann, die Kühl- und Kondensationsstrecke 8 zum Auskondensieren des gebildeten Ammoniaks bei abgesenkter Temperatur und den Ammoniakabscheider 9 zur Abscheidung des aus der Gasphase auskondensierten Ammoniaks als flüssiges Ammoniak 10. Aufgrund der Reaktionsbedingungen verläuft die Ammoniaksynthese im Frischgasreaktor 7 bekanntlich nur unvollständig, es wird also nur ein Teil des frischen Synthesegases 1 im Frischgasreaktor 7 verbraucht. Das den Ammoniakabscheider 9 verlassende restliche Synthesegas 11 wird in der Nachverdichtung 12 auf den Druck verdichtet, der für die Einspeisung in das zweite Synthesesystem 13, welches bei höherem Druck, etwa 150 bis 280 bar, betrieben wird, erforderlich ist.

In dem nachfolgenden Synthesesystem 13 findet eine Ammoniaksynthese in einem Kreislaufsystem nach dem herkömmlichen Stand der Technik statt, wobei das erzeugte Ammoniak als flüssiges Ammoniak 14 abgezogen wird. Um die Anreicherung von inerten Gaskomponenten zu begrenzen, wird kontinuierlich ein Spülstrom 15 abgezogen. Aus diesem Spülstrom 15 wird in einer Aufbereitungseinheit 16 zunächst Ammoniak-ausgewaschen und als flüssiges Ammoniak 17 ausgeschleust, und danach werden die inerten Gasbestandteile und gegebenenfalls auch Stickstoff vom wertvollen Wasserstoff getrennt. Der auf diese Weise zurückgewonnene Wasserstoff wird als Recyclegas 4 in den Prozess zurückgeführt, anstelle der in Fig. 1 gezeigten Zumischung nach der Vorverdichtung 3 kann auch eine Rückführung 19 vor die Vorverdichtung 3 sinnvoll sein (gestrichelt dargestellt), je nachdem bei welchem Druck der Recyclestrom aus der Aufbereitungseinheit 16 anfällt. Selbstverständlich sind auch beide Zumischungsarten parallel möglich, beispielsweise bei einer mehrstufigen Gastrennung innerhalb der Aufbereitungseinheit 16. Je nach Gestaltung der Aufbereitungseinheit 16 kann neben dem Wasserstoff auch Stickstoff zurückgewonnen werden. Die Rückführung hat den Vorteil, dass weniger frisches Synthesegas 1 erzeugt werden muss, was insbesondere angesichts des energetischen und apparativen Aufwands für die Wasserstofferzeugung von Vorteil ist.

Die in der Aufbereitungseinheit 16 abgetrennten Restgase, im wesentlichen Methan und Edelgase, gegebenenfalls auch Stickstoff, werden als Ausschleusungsstrom 18 aus dem Prozess ausgeschleust und können energetisch wie auch exergetisch weiterverwertet werden.

Der technische Widerspruch zwischen Inkaufnahme von Inertenanreicherung im Kreislauf des Hochdruck-Synthesesystems einerseits und erhöhtem Aufwand für Rückverdichtung andererseits besteht hier nicht mehr, wenn das aus dem Spülgas in der Aufbereitungseinheit 16 zurückgewonnene Recyclegas 4 in das Synthesesystem mit geringerem Druck vollständig zurückgeführt werden kann, ohne dass eine Rückverdichtung erforderlich wäre, was ein Vorteil der Erfindung ist. Es ist daher problemlos möglich, eine Anreicherung von Inerten im Kreislaufsystem wesentlich wirtschaftlicher zu verringern.

Vergleicht man eine herkömmliche, bei hohem Druck betriebene Ammoniaksynthese mit einem Hochdruck-Synthesesystem gleicher Kapazität der vorliegenden Erfindung, so zeigt sich, dass das Hochdruck-Synthesesystem der vorliegenden Erfindung bei gleichem Synthesedruck deutlich effizienter arbeiten kann, da der geringere Gehalt an Inerten die erforderlichen Katalysatorvolumina deutlich verringert, den Ammoniakpartialdruck am Reaktorausgang erhöht, somit auch den Ammoniaktaupunkt verschiebt, somit auch die Kühlmittelansprüche beim Auskondensieren des erzeugten Ammoniaks verringert und aufgrund der insgesamt geringeren Kreisgasmenge auch weniger Aufwand bei der Kreisgasförderung hervorruft, was alles Vorteile der Erfindung sind.

Im Vergleich zu herkömmlichen, bei niedrigem Druck betriebenen Ammoniaksynthesen besitzt das Niederdruck-Synthesesystem der erfindungsgemäßen Ammoniaksynthese den Vorteil, dass thermodynamisch günstigere Reaktionsbedingungen bestehen, da auch hier der Inertengehalt aufgrund des Frischgasverfahrens sehr gering ist, auch falls mehrere Frischgassysteme hintereinander angeordnet sind, steigt der Inertengehalt nur langsam von System zu System an. Daher werden auch in diesen Anlagenteilen geringere Katalysatorvolumina, oder alternativ ein geringeres Verhältnis von hochaktiven zu Standardkatalysatoren, als bisher üblich benötigt, was ein Vorteil der Erfindung ist. Beispielsweise können hochaktive, verbesserte Magnetitkatalysatoren mit Promotoren für niedrigen Druck sowie Edelmetallkatalysatoren, etwa auf Rutheniumbasis, in kleineren Mengen wirtschaftlich eingesetzt werden. Hierzu zählen auch Nitride der sechsten und achten Nebengruppe des Periodensystems der Elemente.

Ein weiterer Vorteil der Erfindung besteht darin, dass durch die Aufteilung der Produktion auf mehrere Synthesesysteme sehr große Anlagenkapazitäten mit herkömmlichen Apparategrößen realisiert werden können, ohne die Nachteile in Kauf nehmen zu müssen, die bei einem sonst erforderlichen Wechsel von einsträngigen auf mehrsträngige Konzepte entstehen. In der Regel sind die baugrößenkritischen Komponenten einer herkömmlichen Hochdruck-Ammoniaksynthese der Synthesegasverdichter und die heißen Apparate des Hochdruck-Synthesekreislaufs. Diese alle werden bei der vorliegenden Erfindung tendenziell entlastet, da der zweite Teil des Synthesegasverdichters nur noch einen Teil des Gesamtsynthesegases auf den hohen Druck verdichten muss, nämlich nur noch den Teil, der nicht schon im Niederdrucksystem zu Produkt umgesetzt und auskondensiert wurde. Darüber hinaus bewirkt der geringere Inertenspiegel im Hochdruck-Synthesekreislauf, dass der Hochdruck-Synthesekreislauf bei gleicher Produktion insgesamt kleiner gebaut werden kann als in einer Anlage mit nur einem Reaktionssystem. Statt von vorne herein kleiner zu bauen, lassen sich diese günstigen Eigenschaften auch dazu benutzen, vorhandene Anlagen in ihrer Kapazität entsprechend zu erweitern.

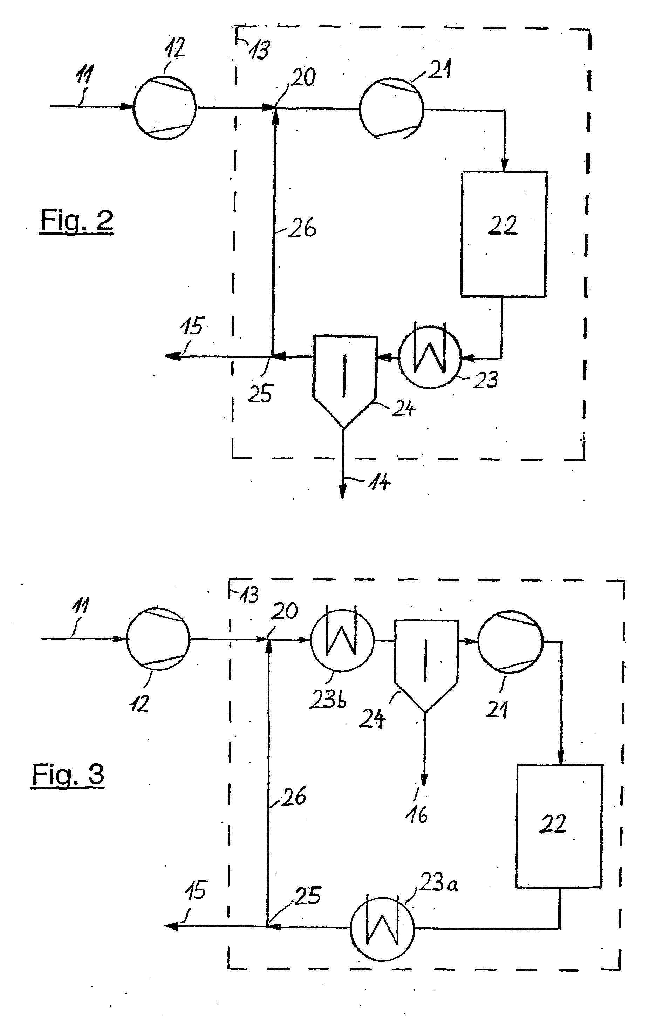

Fig. 2 stellt eine Möglichkeit dar, den Synthesegasrest 11 nach seiner Nachverdichtung 12 in das nachfolgende Synthesesystem 13 (gestrichelt dargestellt) einzubinden, vorzugsweise wenn es sich um eine Neuanlage handelt. Hierbei leitet man das in der Verdichtung 12 nachverdichtete Synthesegas an einer Stelle nach der Ammoniakabscheidung 24, aber noch vor dem Ammoniakreaktor 22 in den Kreislauf ein, in der Regel direkt vor der Kreislaufverdichtung 23, es ist jedoch auch möglich, abweichend von der Darstellung in Fig. 2 die Synthesegaszuführung 20 nach der Kreislaufverdichtung 21 anzuordnen. In der Kreislaufverdichtung 21 werden die Druckverluste der einzelnen Verfahrensschritte innerhalb des Kreislaufsystems ausgeglichen. Hinter der Kreislaufverdichtung sind der Ammoniakreaktor 22, der üblicherweise aus mehreren Abschnitten mit Zwischenkühlung besteht, die Kühl- und Kondensationsstrecke 23 für das gebildete Ammoniak und die Ammoniakabscheidung 24, bei der flüssiges Ammoniak 14 gewonnen wird, angeordnet. Die Spülgasausschleusung 25 erfolgt an dem Ort der höchsten Konzentration von Inertgasbestandteilen bei niedriger .. Temperatur, was die nachfolgende Abtrennung der restlichen Ammoniakanteile in der Aufbereitungseinheit 16 (siehe Fig. 1) erleichtert. Das restliche Kreislaufgas 26 wird zur Synthesegaszuführung 20 geführt, womit sich der Kreislauf schließt.

Fig. 3 stellt eine weitere Möglichkeit dar, den Synthesegasrest 11 nach seiner Nachverdichtung 12 in das zweite Synthesesystem 13 (gestrichelt dargestellt) einzubinden, sowohl bei einer Neukonzeption als auch bei einer bestehenden Anlage, die bei hohem Druck betrieben wird. Hierbei wird das in der Verdichtung 12 nachverdichtete Synthesegas zwischen dem Hochdruck-Reaktionssystem und der Produktabscheidung eingeleitet. In der Regel wird bei bestehenden Anlagen die Synthesegaszuführung 20 in oder nach der Kühl- und Kondensationsstrecke 23a bzw. 23b, jedoch vor der Ammoniakabscheidung 24 angeordnet. In der anschließenden Kreislaufverdichtung 21 werden die Druckverluste der einzelnen Verfahrensschritte innerhalb des Kreislaufsystems ausgeglichen. Hinter der Kreislaufverdichtung ist der Ammoniakreaktor 22, der üblicherweise aus mehreren Abschnitten mit Zwischenkühlung besteht, angeordnet. Die Spülgasausschleusung 25 erfolgt wiederum am Ort der höchsten Inertenkonzentration. Das restliche Kreislaufgas 26 wird zur Synthesegaszuführung 20 geführt, womit der Kreislauf geschlossen wird.

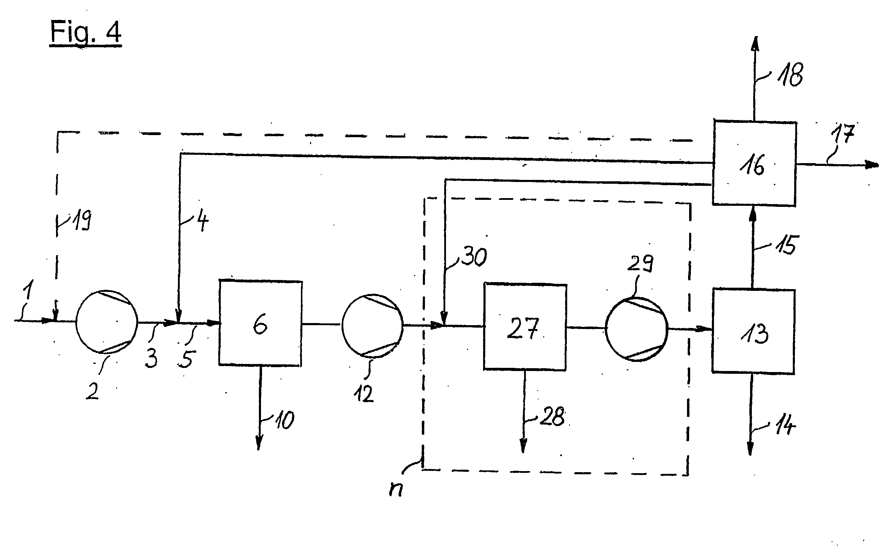

Fig. 4 zeigt eine Anordnung, in der mehrere Synthesesysteme 27, dargestellt innerhalb eines mit "n" bezeichneten, gestrichelten Kastens, wobei "n" für eine beliebige Zahl ab 1 steht, hintereinander mit Synthesegas beaufschlagt werden und nur das letzte Synthesesystem 13 als Kreislauf-Synthesesystem ausgeführt wird. Alle eingefügten Synthesesysteme 27 erzeugen Ammoniak 28. Sie weisen eine nachgeschaltete Verdichtungsstufe 29 auf und es können optional Rückführströme 30 dem eingesetzten Synthesegas zugemischt werden.

Die Erfindung wird im Folgenden anhand von 2 Berechnungsbeispielen näher erläutert. Das erste Berechnungsbeispiel zeigt eine erfindungsgemäße Anlage zur Erzeugung von Ammoniak, wie sie im Falle einer Neukonzeption ausgelegt wird. Das zweite Berechnungsbeispiel zeigt eine erfindungsgemäße Anlage zur Erzeugung von Ammoniak, wie sie im Falle einer Nachrüstung einer bestehenden Altanlage ausgelegt wird. Da die jeweiligen Möglichkeiten der Optimierung des Verfahrens in vielgestaltiger Weise von den jeweiligen Umgebungsbedingungen der Anlage, z. B. Klima, Rohstoffversorgung, Infrastruktur und dergleichen abhängen, ist es dem Fachmann jedoch möglich, von den beispielgebenden Mengenstromverhältnissen abzuweichen, ohne den Erfindungsgedanken zu verlassen.

Die in den beiden Tabellen benutzten Ziffern beziehen sich auf die Bezugsziffern der Figuren, insbesondere Fig. 1, die Mengenströme sind in t/h angeben, die Konzentrationen der Gase in Mol-%. Die Produktionskapazität ergibt sich jeweils aus der Addition der Ströme 10, 14 und 17.

Berechnungsbeispiel 1: Auslegung einer Neuanlage für eine gesamte Produktionskapazität von 2000 t/Tag Ammoniak.

| Strom Nr. | Durchsatz t/h | Konzentration (Mol-%) | | | |
|---|---|---|---|---|---|
| | | NH$_3$ | N$_2$ | H$_2$ | Inertgas |
| 1 | 96,151 | 0,0 | 27,03 | 71,54 | 1,43 |
| 4 | 5,413 | 0,0 | 9,33 | 90,22 | 0,45 |
| 5 | 101,564 | 0,0 | 25,21 | 73,47 | 1,32 |
| 11 | 78,201 | 3,54 | 24,40 | 70,27 | 1,79 |
| 15 | 19,352 | 5,41 | 24,96 | 61,57 | 8,06 |
| 18 | 12,797 | 0,0 | 64,74 | 7,41 | 27,85 |

Produktionsbilanz:

| Strom Nr. | Produktion [t/h] |
|---|---|
| 10 | 23,363 |
| 14 | 58,849 |
| 17 | 1,142 |
| Summe | 83,354 |

Berechnungsbeispiel 2: Auslegung einer Nachrüstung für eine Anlage, deren Produktionskapazität auf 1500 t/Tag Ammoniak ausgelegt ist und die nach einem gängigen Hochdruckverfahren produziert, auf eine neue Produktionskapazität von 1839 t/Tag Ammoniak.

| Strom Nr. | Durchsatz t/h | Konzentration (Mol-%) | | | |
|---|---|---|---|---|---|
| | | NH$_3$ | N$_2$ | H$_2$ | Inertgas |
| 1 | 88,903 | 0,0 | 26,92 | 71,88 | 1,20 |
| 4 | 4,030 | 0,0 | 7,05 | 90,34 | 2,61 |
| 5 | 92,933 | 0,0 | 25,21 | 73,46 | 1,33 |
| 11 | 71,348 | 3,49 | 24,41 | 70,29 | 1,80 |
| 15 | 17,030 | 4,90 | 25,20 | 61,55 | 8,35 |
| 18 | 12,276 | 0,0 | 25,30 | 55,57 | 19,13 |

Produktionsbilanz:

| Strom Nr. | Produktion [t/h] |
|-----------|------------------|
| 10        | 21,585           |
| 14        | 54,318           |
| 17        | 0,724            |
| Summe     | 76,627           |

Die Berechnungsbeispiele dürfen jedoch nicht so verstanden werden, dass der größte Teil der Ammoniakerzeugung im letzten Reaktionssystem zu erfolgen hätte. Je nachdem, wie viele Synthesesysteme nacheinander angeordnet werden, ist es auch möglich, nur einen relativ kleinen Teil der Gesamtproduktion in dem letzten Synthesesystem zu erzeugen.

Bezugszeichenlegende:

| 1 | frisches Synthesegas |
|---|---|
| 2 | Vorverdichtung |
| 3 | vorverdichtetes Synthesegas |
| 4 | Rückführgas |
| 5 | Synthesegas |
| 6 | erstes Synthesesystem |
| 7 | Frischgasreaktor |
| 8 | Kühl- und Kondensationsstrecke |
| 9 | Ammoniakabscheider |
| 10 | flüssiges Ammoniak |
| 11 | Synthesegasrest |
| 12 | Nachverdichtung |
| 13 | nachfolgendes Synthesesystem |
| 14 | flüssiges Ammoniak |
| 15 | Spülstrom |
| 16 | Aufbereitungseinheit |
| 17 | flüssiges Ammoniak |
| 18 | Inertgasausschleusung |
| 19 | Rückführung |
| 20 | Synthesegaszuführung |
| 21 | Kreislaufverdichtung |
| 22 | Ammoniakreaktor |
| 23 | Kühl- und Kondensationsstrecke |
| 23 a,b | Kühl- und Kondensationsstrecke (geteilte Darstellung) |
| 24 | Ammoniakabscheidung |
| 25 | Spülgasausschleusung |
| 26 | Kreislaufgas |
| 27 | Synthesesysteme |
| 28 | flüssiges Ammoniak |
| 29 | Verdichtungsstufen |
| 30 | Rückführströme |

**Patentansprüche**

**1.** Verfahren zur Herstellung von Ammoniak aus frischem Synthesegas, welches außer den Reaktanten Wasserstoff

EP 1 339 641 B1

und Stickstoff inerte Bestandteile enthält, in mindestens zwei Reaktionssystemen, wobei die Synthese von Ammoniak aus Synthesegas nacheinander in verschiedenen Synthesesystemen erfolgt, wobei in allen Synthesesystemen aus jeweils einem Teil des Synthesegases Ammoniak erzeugt und davon ein Teil ausgeschleust wird und jedes nachfolgende Synthesesystem einen höheren Druck als das jeweils vorangegangene Synthesesystem aufweist.

2. Verfahren nach Anspruch 1, **dadurch gekennzeichnet, dass** das erste Synthesesystem als Frischgassystem ausgeführt wird.

3. Verfahren nach einem der Ansprüche 1 oder 2, **dadurch gekennzeichnet, dass** mit Ausnahme des letzten Synthesesystems alle Synthesesysteme als Frischgassysteme ausgeführt sind.

4. Verfahren nach einem der Ansprüche 1 bis 3, **dadurch gekennzeichnet, dass** das letzte Synthesesystem als Kreislaufsystem ausgeführt wird.

5. Verfahren nach einem der Ansprüche 1 bis 4, **dadurch gekennzeichnet, dass** jedes Synthesesystem durch mindestens eine Verdichtungsstufe von dem jeweils darauf folgenden Synthesesystem getrennt ist.

6. Verfahren nach einem der Ansprüche 1 bis 5, **dadurch gekennzeichnet, dass** ein Spülgasstrom, der aus einem Synthesesystem mit einem höheren Druck ausgeschleust wird, nach Abtrennung und Ausschleusung von Inertgasbestandteilen, Ammoniak und möglichen weiteren Gasbestandteilen als Einsatzstrom in ein Synthesesystem mit einem niedrigeren Druck eingespeist wird.

7. Verfahren nach Anspruch 6, **dadurch gekennzeichnet, dass** dieser Spülgasstrom derart dimensioniert wird, dass die Anreicherung mit Inerten in dem System mit dem höchsten Druck nicht mehr als 10 mol.-% beträgt.

8. Verfahren nach einem der Ansprüche 1 bis 3, **dadurch gekennzeichnet, dass** in mindestens einem Frischgasreaktor Katalysatormaterial eingesetzt wird, welches Magnetit mit Promotoren für Niederdrucksysteme enthält.

9. Verfahren nach einem der Ansprüche 1 bis 3, **dadurch gekennzeichnet, dass** in mindestens einem Frischgasreaktor Katalysatormaterial eingesetzt wird, welches Edelmetall enthält und hochaktiv ist.

10. Verfahren nach einem der Ansprüche 1 bis 3, **dadurch gekennzeichnet, dass** in mindestens einem Frischgasreaktor Katalysatormaterial eingesetzt wird, welches Nitride der sechsten und achten Nebengruppe des Periodensystems der Elemente enthält.


## Claims

1. Process for the production of ammonia from synthesis gas, which contains the reactants hydrogen, nitrogen and inert ingredients in at least two reaction systems, the synthesis of ammonia from synthesis gas taking place in several lined-up synthesis systems, whereby ammonia is produced from a portion of the synthesis gas in each system with a part-stream being withdrawn,
**characterised in that** the respective downstream synthesis system is operated at a higher pressure than the respective upstream synthesis system.

2. Process according to claim 1,
**characterised in that** the first synthesis system operates as a make-up gas system.

3. Process according to one of the claims 1 or 2,
**characterised in that** all synthesis systems operate as make-up gas systems with the exception of the last synthesis system.

4. Process according to one of the claims 1 to 3,
**characterised in that** the last synthesis system operates as a loop system.

5. Process according to one of the claims 1 to 4,
**characterised in that** each synthesis system is separated from the next downstream synthesis system by at least one compression stage.

6. Process according to one of the claims 1 to 5,
**characterised in that** a stream of purge gas withdrawn from a synthesis system at a higher pressure is sent as feedstock to a synthesis system operating at a lower pressure, the inert ingredients, ammonia and various other gas ingredients, if any, having been removed before.

7. Process according to claim 6,
**characterised in that** the flow rate of the purge gas stream is rated such that the enrichment with inert ingredients within the system operated at the highest pressure reaches a max. value of 10 molar %.

8. Process according to one of the claims 1 to 3,
**characterised in that** catalyst material containing magnetite with promoters for low-pressure synthesis systems is used in at least one make-up gas reactor.

9. Process according to one of the claims 1 to 3,
**characterised in that** catalyst material containing noble metal and being highly active is used in at least one make-up gas reactor.

10. Process according to one of the claims 1 to 3,
**characterised in that** catalyst material containing nitrides of group numbers VI and VIII in the periodical classification of the elements is used in at least one make-up gas reactor.

**Revendications**

1. Procédé pour la production d'ammoniaque à partir de gaz de synthèse ayant une teneur en hydrogène et azote comme des réactants ainsi que des composants inertes, la synthèse de l'ammoniaque à partir du gaz de synthèse ayant lieu dans de différents systèmes de synthèse liés en série, l'ammoniaque étant produit à l'aide de flux partiels originaires des dits systèmes de synthèse et dont une partie est soutirée,
**caractérisé en ce que** chaque système de synthèse disposé en aval fonctionne à une pression plus élevée que celle du système précédent.

2. Procédé selon la revendication No. 1,
**caractérisé en ce que** le premier système de synthèse est utilisé comme unité à gaz d'apport.

3. Procédé selon la revendication No. 1 ou 2,
**caractérisé en ce que** tous les systèmes de synthèse, à l'exception du système dernier, fonctionne comme unité à gaz d'apport.

4. Procédé selon une revendication des Nos. 1 à 3,
**caractérisé en ce que** le dernier système de synthèse est réalisé comme unité de boucle.

5. Procédé selon une revendication des Nos. 1 à 4,
**caractérisé en ce que** chaque système de synthèse est séparé de l'autre disposé en aval à l'aide d'au moins une étape de compression.

6. Procédé selon une revendication des Nos. 1 à 5,
**caractérisé en ce qu'**un flux de gaz de purge soutiré d'un système de synthèse à pression élevée est envoyé à un tel système fonctionnant à une pression bien inférieure et que les composants inertes, l'ammoniaque et divers autres composants aient été séparés et soutirés au paravant.

7. Procédé selon la revendication No. 6,
**caractérisé en ce que** le débit d'un flux de gaz de purge soit ajusté de telle manière que l'enrichissement en composants inertes dans le système fonctionnant à la pression la plus élevée ne dépasse pas une valeur de 10 % molaire.

8. Procédé selon une revendication des Nos. 1 à 3,

**caractérisé en ce que** de la matière catalytique ayant une teneur en magnétite avec des promoteurs pour les systèmes de synthèse à basse pression est au moins mise en oeuvre dans un réacteur à gaz d'apport.

9. Procédé selon une revendication des Nos. 1 à 3,
**caractérisé en ce que** de la matière catalytique ayant une teneur en métal précieux et une forte activité est au moins mise en oeuvre dans un réacteur à gaz d'apport.

10. Procédé selon une revendication des Nos. 1 à 3,
**caractérisé en ce que** de la matière catalytique ayant une teneur en nitrures des groupes VI et VIII de la classification périodique des éléments est au minimum mise en oeuvre dans un réacteur à gaz d'apport.

Fig. 1

Fig. 2

Fig. 3

Fig. 4

EP 1 339 641 B1